# FASCICULE DE BREVET EUROPEEN

(11) **EP 2 748 395 B1**
(45) Date de publication et mention de la délivrance du brevet: **29.06.2016**
(21) Numéro de dépôt: 12758558.6
(22) Date de dépôt: 09.08.2012
(51) Int. Cl.: E05C 1/00, B64D 29/06

(54) **DISPOSITIF DE VERROUILLAGE À DÉTECTION MÉCANIQUE DE FERMETURE ET OUVERTURE**
VERRIEGELUNGSVORRICHTUNG MIT MECHANISCHER ERKENNUNG VON SCHLIESSEN UND ÖFFNEN
LOCKING DEVICE WITH MECHANICAL DETECTION OF CLOSING AND OPENING

(30) Priorité: 22.08.2011 FR 1157429
(43) Date de publication de la demande: 02.07.2014
(73) Titulaire: Aircelle, 76700 Gonfreville L'Orcher (FR)
(72) Inventeur: GONIDEC, Patrick, F-31530 Bretx (FR)
(74) Mandataire: Gaillarde, Frédéric F. Ch.
(86) Numéro de dépôt international: PCT/FR2012/051875
(87) Numéro de publication internationale: WO 2013/026975

(56) Documents cités:
- EP-A1- 0 480 827
- EP-A2- 1 091 059
- GB-A- 191 517 739
- US-A1- 2004 104 583

## Description

La présente invention se rapporte à un système de verrouillage comprenant un système mécanique associé de détection de la fermeture ou ouverture dudit système de verrouillage et équipant notamment un capot ou une trappe de nacelle de turboréacteur.

Une nacelle d'avion est destinée à entourer un turboréacteur et à produire la poussée du turboréacteur en canalisant les flux engendrés par le moteur. Elle doit aussi pouvoir être ouverte afin d'accéder au moteur et à ses équipements.

La plupart des nacelles de turboréacteur comprennent un capot de soufflante entourant le carter de soufflante du moteur et un corps arrière (souvent un inverseur de poussée) entourant la partie centrale du moteur.

Pour assurer l'accès au moteur et à ses équipements, ces deux composants de nacelle s'ouvrent en général en deux demi-parties.

L'ouverture de ces capots ou trappes est permise grâce à la présence de charnières, généralement montées en partie supérieure de la nacelle, en position dite douze heures, le long d'une ligne de mât, et sont maintenues fermées grâce à une pluralité de verrous montés généralement selon une ligne de verrouillage en partie inférieure, dite six heures.

Il est bien évidemment essentiel qu'après une opération de maintenance, l'intégralité des verrous soit refermée.

A cette fin, il convient de pouvoir s'assurer de manière efficace, sûre et rapide, du bon verrouillage de tous les capots ouvrables d'une nacelle avant toute mise en service de la nacelle. Aujourd'hui, dans la plupart des cas, cette vérification repose quasi-entièrement sur la vigilance du mécanicien qui effectue l'opération de verrouillage. De ce fait, certaines erreurs de maintenance ont causé un nombre significatif de mauvaises fermetures de capots de soufflante, induisant parfois des événements majeurs en vol (ouverture et perte d'un capot de soufflante). Un indicateur clair du verrouillage des capots de nacelles est donc une source d'amélioration significative de la sécurité des vols.

Une des causes les plus fréquentes d'ouverture en vol est la fermeture ou l'ouverture partielle des verrous de capot. Dans ce cas de figure, il est souvent difficile lors d'une vérification de routine de s'apercevoir qu'un ou plusieurs verrous sont mal fermés, car le verrouillage d'un seul verrou « met en place » le capot qui semble alors de loin correctement fermé.

Ainsi, pour fournir un système de détection efficace, il doit être impossible d'amorcer un déverrouillage ou de pouvoir déverrouiller partiellement le capot sans que l'indicateur de statut correspondant n'affiche un statut déverrouillé.

Bien évidemment, de telles considérations s'appliquent également à des nacelles non équipées d'inverseurs de poussée, dites lisses, et comprenant des capots ouvrables permettant d'accéder à l'intérieur de la nacelle de la même manière, ainsi qu'à d'autres capots de maintenance équipant la nacelle.

Il existe donc un besoin pour un système de détection de fermeture répondant aux exigences ci-dessus mentionnées.

On connaît de tels systèmes électriques de détection de verrouillage permettant d'assurer un contrôle visuel de situation. Un tel système nécessite toutefois une source d'alimentation électrique et est sujet à d'éventuelles défaillances électriques.

Une des difficultés d'un système mécanique est toutefois de s'assurer que l'indicateur de déverrouillage affiche bien un statut de déverrouillage dès le premier verrou ouvert, et réciproquement que cet indicateur ne puisse passer en statut de verrouillage que lorsque strictement tous les verrous sont verrouillés.

Par ailleurs, les systèmes mécaniques existant se bornent à contrôler la position de la poignée du verrou, alors que la fonction mécanique recherchée est la mise sous contrainte des verrous.

La publication FR 2966488 décrit une solution à ces problèmes.

A cette fin, la publication FR 2966488 décrit un dispositif de verrouillage entre une première structure et une deuxième structure, comprenant au moins une paire de verrouillage comportant au moins un pêne rattaché à la première structure et apte à venir s'engager avec au moins un moyen de retenue correspondant, rattaché à la deuxième structure, le pêne étant par ailleurs monté mobile à l'encontre d'au moins un moyen de renvoi élastique tendant à le ramener dans une position d'écartement du moyen de retenue,

ledit dispositif de verrouillage comprend au moins une tringlerie de détection, montée mobile entre une première position dans laquelle elle permet le déverrouillage du pêne et du moyen de retenue, au moins une partie du pêne venant alors en prise avec la tringlerie, de manière à en bloquer un retour éventuel de cette dernière vers une deuxième position, et ladite deuxième position dans laquelle la tringlerie vient en prise avec au moins une partie de la paire de verrouillage de manière à en bloquer le déverrouillage.

En prévoyant une tringlerie bloquée en position par le pêne lorsque la paire de verrouillage est déverrouillée, la tringlerie ne peut revenir dans sa deuxième position, indiquant le verrouillage du dispositif que lorsque la paire de verrouillage est effectivement reverrouillée. Dans le cas d'un ensemble de paires de verrouillage dont les tringleries sont reliées entre elles, ces dernières ne pourront donc revenir dans leur deuxième position indiquant le reverrouillage de la paire de verrouillage associée que lorsque toutes les paires de verrouillage auront bien été reverrouillées.

A l'inverse pour le déverrouillage, en prévoyant un élément de tringlerie venant en prise avec une partie de la paire de verrouillage pour en bloquer le déverrouillage, il est nécessaire de basculer la tringlerie dans sa première position, indiquant donc le déverrouillage, pour procéder effectivement au déverrouillage de la paire de verrouillage.

Ainsi, grâce à un tel dispositif, un indicateur de situation lié à la tringlerie indiquera toujours correctement le statut des paires de verrouillage et empêchera tout changement de statut qui ne serait pas répercuté audit indicateur de situation.

Les études de mises en oeuvre et de développement de ce système de verrouillage ont montré qu'il pouvait encore être perfectionné sur plusieurs aspects.

Le dispositif précédent prévoit notamment que l'indicateur, et plus généralement la tringlerie associée, doit être basculée en position de déverrouillage pour permettre le déverrouillage effectif des verrous.

Ceci peut constituer une gêne potentielle pour un opérateur à la manoeuvre.

Il convient donc de pallier cet inconvénient en prévoyant un système permettant de basculer automatiquement l'indicateur dès qu'un verrou est déchargé et réciproquement à la fermeture.

La présente invention vise ainsi à proposer un dispositif de verrouillage selon la publication FR 2966488 et dans lequel l'indicateur de déverrouillage est automatiquement ouvert lorsqu'un seul des verrous est déchargé.

Pour ce faire, la présente invention selon la revendication 1 se rapporte à un dispositif de verrouillage entre une première structure et une deuxième structure, comprenant au moins une paire de verrouillage comportant au moins un pêne rattaché à la première structure et apte à venir s'engager avec au moins un moyen de retenue correspondant, rattaché à la deuxième structure, le pêne étant par ailleurs monté mobile à l'encontre d'au moins un moyen de renvoi élastique tendant à le ramener dans une position d'écartement du moyen de retenue,
ledit dispositif de verrouillage comprenant en outre au moins une tringlerie de détection, montée mobile entre une première position, dite déverrouillée, dans laquelle elle permet le déverrouillage du pêne et du moyen de retenue, au moins une partie du pêne venant alors en prise avec la tringlerie, de manière à en bloquer un retour éventuel de cette dernière vers une deuxième position, et ladite deuxième position, dite verrouillée, dans laquelle la tringlerie vient en prise avec ladite partie du pêne de manière à s'opposer à son déverrouillage,
caractérisé en ce que la partie du pêne vient en prise avec la tringlerie par l'intermédiaire d'au moins une pièce de détection de cette dernière, ladite pièce étant montée mobile entre une première position, dite verrouillée, correspondant à un verrouillage de la paire de verrouillage dans laquelle elle permet la position verrouillée de la tringlerie et est apte à être entraînée par le pêne vers une position déverrouillée dans laquelle elle entraîne la tringlerie de manière non réversible vers sa propre position de déverrouillée, le passage de la tringlerie dans l'état déverrouillé étant ainsi assuré dès le premier verrou ouvert.

Par paire de verrouillage, on entend une paire d'éléments pêne et crochet, formant ensemble un verrou.

Ainsi, en associant au dispositif selon la publication FR 2966488 une pièce de détection entraînée de manière non réversible par le pêne, l'ouverture du pêne entraîne automatiquement le passage de la tringlerie, et par voie de conséquence un indicateur associé, en position déverrouillée.

Il convient de noter que l'indicateur associé peut être réalisé de plusieurs manières. Il pourra notamment s'agir d'un système mécanique, par exemple, utilisant le mouvement de la tringlerie, mais également d'un système électrique utilisant des capteurs de proximité de la tringlerie et renvoyant un signal électrique correspondant vers des voyants lumineux, par exemple.

Par entraînement de manière non réversible, on entend que le pêne lors de son déverrouillage entraîne la pièce de détection de sa position verrouillée à déverrouillée et par voie de conséquence la tringlerie vers sa propre position déverrouillée mais qu'un retour du pêne, et / ou de la pièce de détection, dans sa position verrouillée ne provoque pas en lui-même le retour de la tringlerie vers sa position verrouillée.

Ainsi, le mouvement de déverrouillage est intrinsèquement lié à la tringlerie et tout déverrouillage d'une paire de verrouillage entraînera le basculement de la tringlerie vers sa position correspondante.

En revanche, le retour verrouillé de la paire de verrouillage est dissociée de la tringlerie, qui ne pourra donc être ramenée dans sa position de verrouillage que si toutes les paires de verrouillage sont bien verrouillées.

De manière avantageuse, la pièce de détection vient en prise avec la tringlerie par l'intermédiaire d'une fourche apte à coopérer avec un épaulement correspondant de la tringlerie. Lors du basculement, la fourche vient appuyer sur l'épaulement et entraîne la tringlerie. En revanche, le retour de la fourche n'exerce aucune force sur l'épaulement et ne ramène donc pas la tringle en position.

Avantageusement, la pièce de détection est montée pivotante de manière à basculer entre sa première et deuxième position.

De manière préférentielle, la tringlerie est montée à l'encontre d'un organe élastique tendant à la ramener en position verrouillée.

Préférentiellement, la pièce de détection vient en butée contre une partie du pêne.

Selon une première variante préférée de réalisation, le pêne se présente sous la forme d'un étrier.

Selon une deuxième variante, complémentaire ou alternative, le moyen de retenue se présente sous la forme d'un crochet.

Avantageusement, le pêne est apte à entraîner la pièce de détection par l'intermédiaire d'une tige mobile en translation.

Avantageusement encore, la tige est montée mobile avec le pêne.

Selon l'invention, le dispositif comprend plusieurs paires de verrouillage, disposées notamment le long d'une ligne de verrouillage, les tringleries associées étant reliées entre elles par au moins un moyen de transmission mécanique.

La présente invention se rapporte également à un capot mobile, caractérisé en ce qu'elle comprend au moins un dispositif de verrouillage associé selon l'invention.

La présente invention sera mieux comprise à la lumière de la description détaillée qui suit en regard du dessin annexé dans lequel :
- la figure 1 est une représentation schématique d'un capot ouvrant de nacelle équipé d'un dispositif de verrouillage selon l'invention,
- les figures 2 et 3 sont des vues en coupe longitudinale respectivement de dessus et de côté d'une paire de verrouillage du dispositif de la figure 1, en position verrouillée.
- les figures 4 et 5 sont des vues en coupe longitudinale respectivement de dessus et de côté de la paire de déverrouillage des figures 2 et 3, en position déverrouillée
- la figure 6 est une vue générale d'un dispositif de verrouillage selon l'invention comprenant deux paires de verrouillage en position verrouillée.
- la figure 7 est une vue du dispositif de la figure 6 dans lequel une paire de verrouillage a été déverrouillée.
- la figure 8 est une vue du dispositif de la figure 6 en cours de reverrouillage.
- la figure 9 est une représentation schématique d'un dispositif de verrouillage selon l'invention avec indicateur de verrouillage de part et d'autre d'une nacelle.

Comme exposé précédemment, l'objet de la présente invention se fonde essentiellement sur un dispositif de verrouillage tel que décrit dans la publication FR 2966488 et un mode de réalisation va être rappelé à titre préliminaire.

Un tel dispositif de verrouillage selon la publication FR 2966488 comprend une pluralité de paires de verrouillage possédant une tringlerie liée à un indicateur de statut (verrouillé / déverrouillé).

Une telle paire de verrouillage est formée classiquement d'un pêne se présentant sous la forme d'un étrier apte à coopérer avec un crochet correspondant formant un moyen de retenue pour le pêne.

L'étrier possède une tige grâce à laquelle il est monté mobile en translation entre une position de verrouillage dans laquelle il peut être engagé avec le crochet et une position de déverrouillage dans laquelle il est écarté du crochet. De plus, l'étrier est monté à l'encontre d'un moyen de retour élastique se présentant sous la forme d'un ressort tendant à le renvoyer en position déverrouillée.

La paire de verrouillage est associée à une tringlerie de détection mobile entre une première position dans laquelle elle permet le déverrouillage de l'étrier et du crochet et une deuxième position dans laquelle la tringlerie vient en prise avec au moins une partie de la paire de verrouillage, de manière à en bloquer le déverrouillage.

Pour ce faire, la tringlerie comprend un premier élément mobile en translation selon une direction sensiblement transversale à la paire de verrouillage et se présentant sous la forme d'une tige possédant une lumière transversale, disposées de manière telle que lorsque la tringlerie est dans sa première position permettant le déverrouillage, la tige de l'étrier pénètre la lumière de la tige qui sert alors de butée à cette dernière, et que lorsque la tringlerie est dans sa deuxième position correspondant au verrouillage de la paire de verrouillage, la tige serve de butée à la tige de l'étrier, empêchant un éventuel recul de ce dernier.

La tringlerie comprend également un deuxième élément mobile, se présentant sous la forme d'un doigt de verrouillage monté mobile selon une direction sensiblement transversale à la paire de verrouillage apte à coopérer avec le crochet, notamment par l'intermédiaire d'un crocheton d'extrémité, de manière à empêcher le déverrouillage dudit crochet. Il convient de préciser que ce doigt de verrouillage ne vise pas à constituer un moyen de verrouillage sécurisé en vol, et ainsi à remplacer d'autres lignes de défense pour empêcher l'ouverture du crochet, mais vise à retenir ledit crochet contre une ouverture intempestive par un opérateur, conformément à l'objet de l'invention.

Le doigt de verrouillage est relié à la tige par une bascule à pivot assurant que le doigt de verrouillage est rétracté lorsque la tige est en position permettant le déverrouillage, et réciproquement que le doigt de verrouillage est engagé lorsque la tige bloque le retrait de l'étrier.

Un dispositif de verrouillage selon la présente invention va maintenant être décrit en détail.

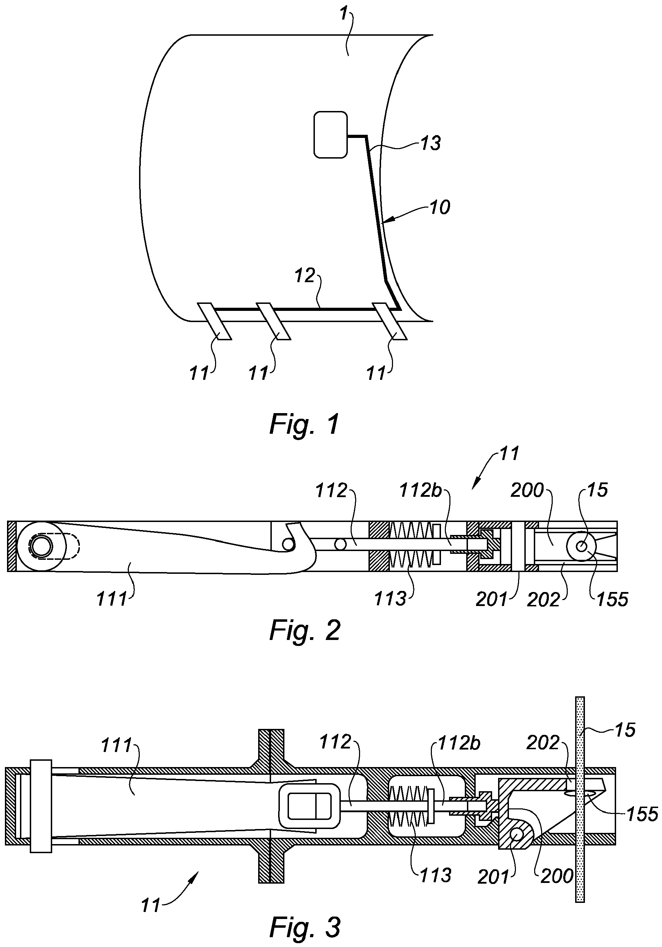

La figure 1 montre un capot 1 ouvrant d'une nacelle de turboréacteur (non représentée). Plus particulièrement, il pourra s'agir d'un capot de soufflante.

Le capot 1 est monté pivotant autour d'une ligne charnière supérieure (non représentée) et est apte à être verrouillé en partie inférieure au niveau d'une ligne de verrouillage le long de laquelle est installé un dispositif de verrouillage 10 selon l'invention.

Ce dispositif de verrouillage 10 comprend une pluralité de paires de verrouillage 11 possédant, conformément à l'invention, une tringlerie 12 liée à un indicateur de statut (verrouillé / déverrouillé) 13.

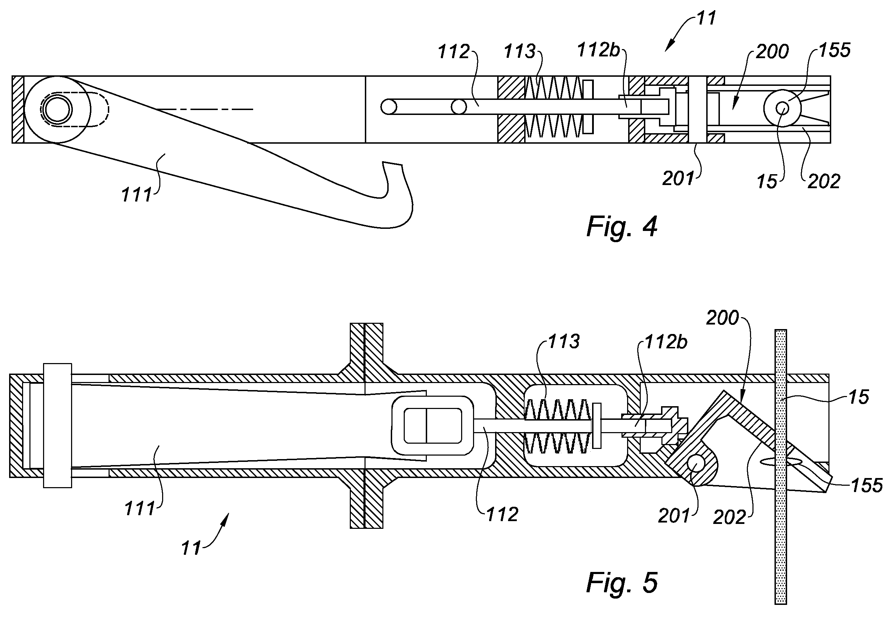

Une paire de verrouillage 11 et son fonctionnement conformément à l'invention est représentée en détail sur les figures 2 à 5.

Une paire de verrouillage 11 comprend classiquement un pêne se présentant sous la forme d'un étrier 112 et apte à coopérer avec un crochet correspondant 111 formant un moyen de retenue pour le pêne.

Dans les modes de réalisations selon l'état de l'art, cet étrier est généralement fixe par rapport à la structure du verrou sur laquelle il est vissé.

Dans la présente invention, l'étrier 112 possède une tige 112b grâce à laquelle il est monté mobile en translation entre une position de verrouillage dans laquelle il peut être engagé avec le crochet 111 et une position de déverrouillage dans laquelle il est écarté du crochet 111.

De plus, l'étrier 112 est monté à l'encontre d'un moyen de retour élastique se présentant sous la forme d'un ressort 113 tendant à le renvoyer en position déverrouillée.

Conformément à l'invention, la paire de verrouillage 11 est associée à une tringlerie 15 de détection.

Cette tringlerie 15 se présente sous la forme d'un câble et est mobile entre une première position dans laquelle elle permet le déverrouillage de l'étrier 112 et du crochet 111 et une deuxième position dans laquelle la tringlerie vient en prise avec au moins une partie de la paire de verrouillage, de manière à en bloquer le déverrouillage.

L'ensemble des tringlerie 15 pour chaque paire de verrouillage 11 forme la tringlerie 12 du système.

Conformément à l'invention la partie du pêne 112, et plus précisément sa tige 112b, vient en prise avec la tringlerie 15 par l'intermédiaire d'au moins une pièce de détection 200 de cette dernière, ladite pièce 200 étant montée mobile entre une première position, dite verrouillée, correspondant à un verrouillage de la paire de verrouillage 11 dans laquelle elle permet la position verrouillée de la tringlerie 15 et est apte à être entraînée par le pêne 112 vers une position déverrouillée dans laquelle elle entraîne la tringlerie 15 de manière non réversible vers sa propre position de déverrouillée.

Plus précisément, la pièce de détection 200 se présente sous la forme d'une pièce sensiblement triangulaire apte à basculer par pivotement autour d'un axe 201 sensiblement perpendiculaire à la tringlerie 15 et légèrement décalé de l'axe de la tige 112b du pêne 112.

La pièce de détection 200 vient en prise avec la tringlerie 15 par l'intermédiaire d'une fourche 202 apte à coopérer avec un épaulement 155 correspondant de la tringlerie.

En position verrouillée initiale, correspondant à une position de verrouillage de la paire de verrouillage 11, et de verrouillage de la tringlerie 15, la pièce de détection 200 est en butée contre la tige 112b du pêne 112 et l'épaulement 155 de la tringlerie 15 vient en butée contre la fourche 202 de la pièce de détection 200.

Lors du déverrouillage du pêne 112, celui-ci et sa tige 112b sont forcés par le ressort 113 vers une position déverrouillée en retrait. Ce faisant, la tige 112b du pêne 112 repousse la pièce de détection 200 et force son basculement autour de son axe de pivotement 201 vers sa position déverrouillée.

La pression de la tige 112b du pêne 112 sur la pièce de détection 200 exerce une force suffisante pour que lors de son basculement, la pièce de détection 200, et plus précisément sa fourche 202 au niveau de la tringlerie 15, appuie sur l'épaulement 155 de ladite tringlerie 15 et l'entraîne avec elle, provoquant son retrait vers sa position déverrouillée.

Tant que le pêne 112 est déverrouillé, la tige 112b dudit pêne 112 permettra de maintenir la pièce de détection 200 en position déverrouillée basculée et empêchera son retour vers sa position déverrouillée. Il s'ensuit que la tringlerie 115 ne peut pas non plus être ramenée en position déverrouillée puisque la fourche 202 de la pièce de détection 200 bloque l'épaulement 155 de la tringlerie 15 et empêche donc tout déplacement de cette dernière vers sa position déverrouillée.

Pour permettre un retour de la tringlerie 15 en position verrouillée, il convient de reverrouiller le pêne 112. Ce faisant, la tige 112b dudit pêne 112 est ramenée en retrait et ne s'oppose plus au basculement retour de la pièce de détection 200 vers sa position verrouillée. Ce basculement retour s'effectuera notamment en ramenant la tringlerie 15 vers sa position verrouillée, l'épaulement 155 forçant alors le retour de la pièce de détection 200.

Ce basculement pourra s'effecteur automatiquement en équipant la tringlerie 15 d'un moyen de retour élastique. La raideur de ce moyen de retour élastique devra bien évidemment être inférieure à la raideur du ressort 113 du pêne.

Après avoir détaillé le fonctionnement d'une paire de verrouillage 11, il convient de décrire le fonctionnement d'un dispositif de verrouillage complet 10.

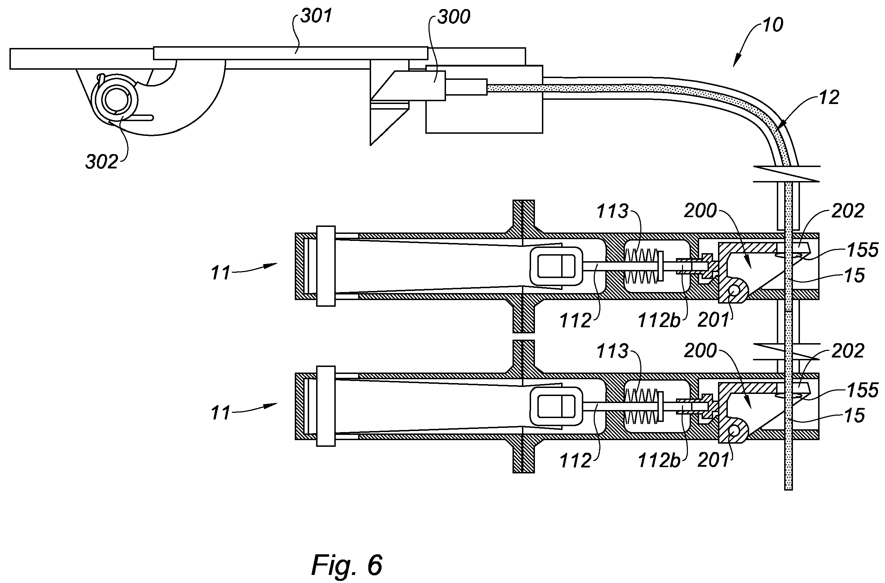

La figure 6 est une représentation schématique d'un tel dispositif de verrouillage 10 comprenant deux paires de verrouillage 11 telles que décrite précédemment, la tringlerie 12 étant commune entre les deux paires de verrouillage 11 et est reliée en partie terminale à une gâche 300 apte à coopérer avec un panneau indicateur 301 monté pivotant à l'encontre d'un ressort 302 tendant à forcer son ouverture.

Plus précisément, en position indiquant un verrouillage du dispositif, le panneau indicateur 301 est rétracté dans la continuité d'une paroi de la nacelle et est maintenu dans cette position par la gâche 300.

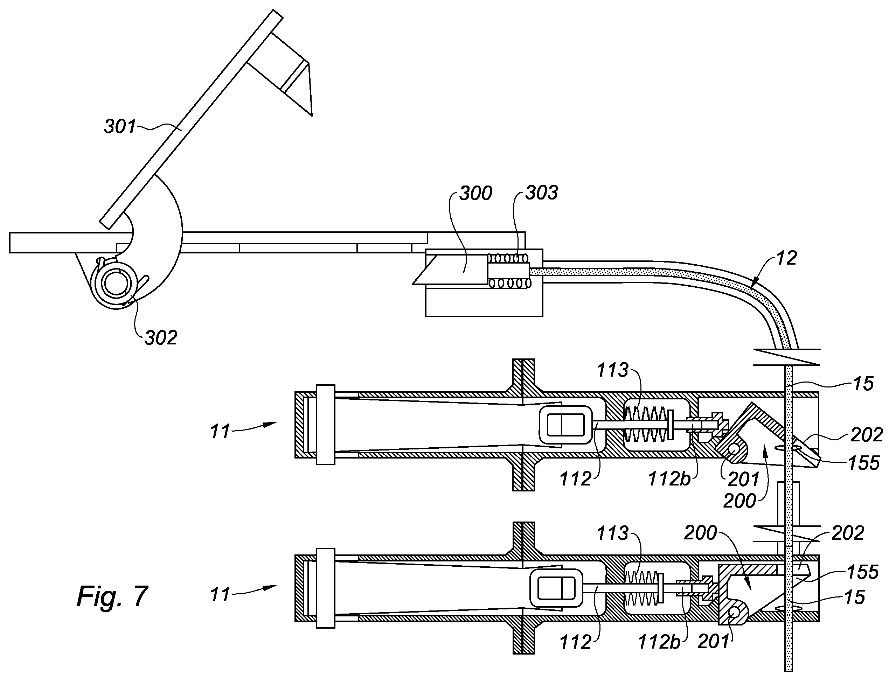

Lors d'un déverrouillage (figure 7), la gâche 300 est rétractée, libérant ainsi le panneau indicateur 301 qui pivote et vient en saillie de ladite paroi.

La gâche 300 est monté à l'encontre d'un moyen de retour élastique 303 tendant à la ramener, et par voie de conséquence tendant également à ramener la tringlerie 12, 15, vers une position déverrouillée.

Initialement, comme représenté sur la figure 6, les deux paires de verrouillage 11 sont en position verrouillée. La tringlerie 12, 15, est également en position verrouillée, les épaulements 155 au niveau de chaque paire de verrouillage 11 venant en butée contre la fourche 202 de la pièce de détection 200 correspondante.

La gâche 300 est repoussée par son ressort 303 en position de verrouillage et retient ainsi le panneau indicateur 301 contre la paroi de la nacelle.

Sur la figure 7, une seule paire de verrouillage 11 a été déverrouillée. Le basculement de la pièce de détection 200 de cette paire de verrouillage 11 a entraîné en retrait l'épaulement 155 correspondant et la tringlerie 15 vers sa position déverrouillée.

Cette dernière étant commune avec la deuxième paire de verrouillage 11 l'épaulement 155 de la deuxième paire 11 a également été déplacé en retrait.

Ce faisant, le retrait de la tringlerie 12, 15 force également le retrait de la gâche 300 contre son ressort 303, ce qui libère le panneau indicateur 301 qui se déploie en saillie de la paroi de la nacelle.

L'ensemble est bloqué dans cette position tant que la paire de verrouillage 11 déverrouillée n'a pas été reverrouillée.

Dans cette position, il n'est pas possible de ramener le panneau indicateur 301 contre la paroi de la nacelle. La gâche 300 étant rétractée, ledit panneau 301 re-pivotera automatiquement en saillie de la paroi.

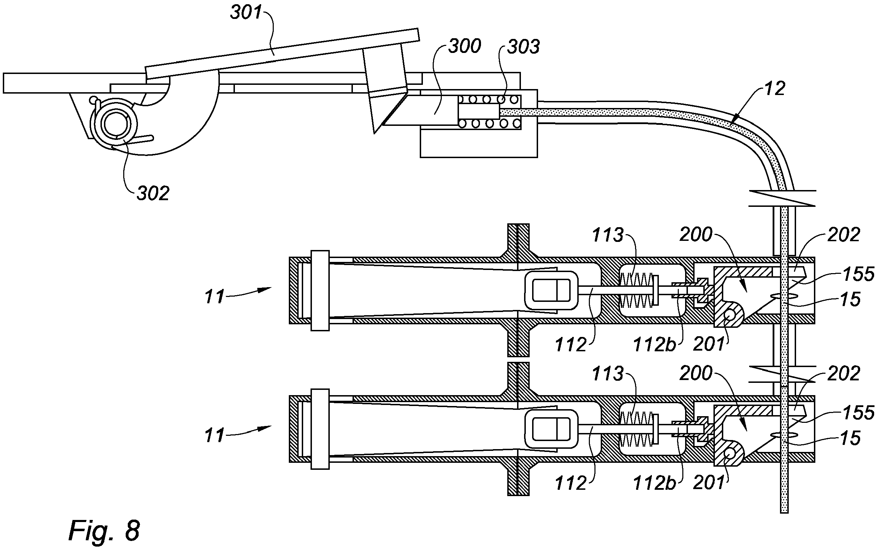

Le reverrouillage est illustré sur la figure 8.

Comme expliqué précédemment, le reverrouillage de la paire de verrouillage 11 rétracte la tige 112b du pêne 112 et permet le retour de la pièce de détection 200 en butée contre cette dernière dans sa position verrouillée.

Ce retour s'effectue sous l'action des épaulements 155 de la tringlerie 12, 15 forcée vers sa position verrouillée par le moyen de retour élastique 303 de la gâche 300.

Le panneau indicateur 301 est alors ramené manuellement contre la paroi de la nacelle et engagé avec la gâche 300 qui le maintient. Cela confirme le contrôle du reverrouillage par l'opérateur.

Ainsi, dans le dispositif selon l'invention, il y a basculement du panneau indicateur 301 dès le déverrouillage d'une paire de verrouillage 11 sans que l'opérateur ait besoin de désarmer le système de verrouillage 10 préalablement. Ensuite, il n'est pas possible de ramener le panneau indicateur 301 dans sa position masquée indiquant un reverrouillage tant que ce dernier n'est pas effectif pour toutes les paires de verrouillage 11.

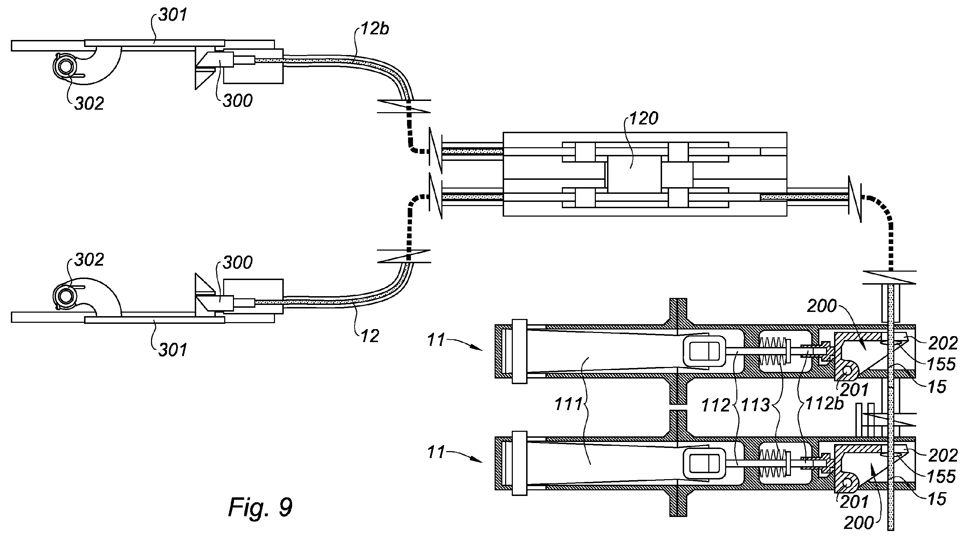

Avantageusement, comme représenté sur la figure 9, il est intéressant, notamment dans le cas d'une nacelle, de prévoir des panneaux indicateurs 301 de part et d'autre de la nacelle de manière, par exemple, à en assurer une visibilité optimale.

Pour ce faire, on prévoira sur la tringlerie 12 un émerillon 120 de câble de transmission transmettant le mouvement de la tringlerie initiale 12 à une ou plusieurs tringleries secondaires 12b raccordées à une gâche 300 et un panneau indicateur 301 correspondant.

De manière alternative ou complémentaire, la tringlerie 12 peut etre également attelée à un système de détection électrique (par exemple un détecteur de proximité) qui renverra une indication de la position de la tringlerie 12 sous forme d'un signal électrique. Ce dispositif peut s'employer soit seul soit en parallèle du système mécanique décrit plus haut.

Avantageusement, la détection électrique sera doublée pour raison de sécurité et les capteurs pourront être avantageusement répartis le long de la tringlerie de manière à détecter d'éventuelles ruptures mécaniques de cette dernière.

Bien que l'invention ait été décrite avec un exemple particulier de réalisation, il est bien évident qu'elle n'y est nullement limitée. Il est notamment bien évident qu'elle n'est pas limitée au système indicateur décrit et que tout système d'indication d'un état de verrouillage ou déverrouillage commandé directement ou indirectement par la tringlerie est possible. On pourra également prévoir, de manière alternative ou complémentaire, des indicateurs lumineux, etc ...

## Revendications

1. Dispositif de verrouillage (10) entre une première structure et une deuxième structure, comprenant plusieurs paires de verrouillage (11), disposées notamment le long d'une ligne de verrouillage, chaque paire de verrouillage (11) comportant au moins un pêne (112) rattaché à la première structure et apte à venir s'engager avec au moins un moyen de retenue (111) correspondant, rattaché à la deuxième structure, le pêne étant par ailleurs monté mobile à l'encontre d'au moins un moyen de renvoi élastique (113) tendant à le ramener dans une position d'écartement du moyen de retenue,
chaque paire de verrouillage comprenant en outre une tringlerie (15) de détection, montée mobile entre une première position, dite déverrouillée, dans laquelle elle permet le déverrouillage du pêne et du moyen de retenue, au moins une partie du pêne venant alors en prise avec la tringlerie, de manière à en bloquer un retour éventuel de cette dernière vers une deuxième position, et ladite deuxième position, dite verrouillée, dans laquelle la tringlerie vient en prise avec ladite partie du pêne de manière à s'opposer à son déverrouillage, et en ce que les tringleries (15) associées aux paires de verrouillage (11) sont reliées entre elles par au moins un moyen (12) de transmission mécanique, et en ce que la partie du pêne vient en prise avec la tringlerie par l'intermédiaire d'au moins une pièce de détection (200) de cette dernière, ladite pièce étant montée mobile entre une première position, dite verrouillée, correspondant à un verrouillage de la paire de verrouillage dans laquelle elle permet la position verrouillée de la tringlerie et est apte à être entraînée par le pêne vers une position déverrouillée dans laquelle elle entraîne la tringlerie de manière non réversible vers sa propre position de déverrouillée, le passage de la tringlerie dans l'état déverrouillé étant ainsi assuré dès le premier verrou ouvert.

2. Dispositif (10) selon la revendication 1, **caractérisé en ce que** la pièce de détection (200) vient en prise avec la tringlerie (15) par l'intermédiaire d'une fourche (202) apte à coopérer avec un épaulement (155) correspondant de la tringlerie.

3. Dispositif (10) selon l'une quelconque des revendications 1 ou 2, **caractérisé en ce que** la pièce de détection (200) est montée pivotante de manière à basculer entre sa première et deuxième position.

4. Dispositif (10) selon l'une quelconque des revendications 1 à 3, **caractérisé en ce que** la tringlerie (15) est montée à l'encontre d'un organe élastique (303) tendant à la ramener en position verrouillée.

5. Dispositif (10) selon l'une quelconque des revendications 1 à 4, **caractérisé en ce que** dans sa position verrouillée, la pièce de détection (200) vient en butée contre une partie du pêne (112).

6. Dispositif (10) selon l'une quelconque des revendications 1 à 5, **caractérisé en ce que** le pêne se présente sous la forme d'un étrier (112).

7. Dispositif (10) selon l'une quelconque des revendications 1 à 6, **caractérisé en ce que** le moyen de retenue se présente sous la forme d'un crochet (111).

8. Dispositif (10) selon l'une quelconque des revendications 1 à 7, **caractérisé en ce que** le pêne (112) est apte à entraîner la pièce de détection (200) par l'intermédiaire d'une tige (112b) mobile en translation.

9. Dispositif (10) selon la revendication 8, caractérisé en ce la tige (112b) est montée mobile avec le pêne (112).

10. Nacelle de turboréacteur comprenant au moins un capot (1) mobile, **caractérisé en ce qu'**elle comprend au moins un dispositif de verrouillage (10) associé selon l'une quelconque des revendications 1 à 9 .

## Patentansprüche

1. Verriegelungsvorrichtung (10) zwischen einer ersten Struktur und einer zweiten Struktur, mehrere Verriegelungspaare (11) umfassend, die vor allem entlang einer Verriegelungslinie angeordnet sind, wobei jedes Verriegelungspaar (11) zumindest einen Riegel (112) umfasst, der der ersten Struktur angegliedert ist, und imstande ist, in zumindest ein entsprechendes Rückhaltemittel (111) einzugreifen, das der zweiten Struktur angegliedert ist, wobei der Riegel außerdem mobil an zumindest einem elastischen Rückführmittel (113) montiert ist, das dazu tendiert, ihn in eine Abstandsposition zum Rückhaltemittel zurückzubringen,
wobei jedes Verriegelungspaar darüber hinaus ein Detektionsgestänge (15) umfasst, das mobil zwischen einer ersten Position, die Freigabeposition genannt wird, in der es die Freigabe des Riegels und des Rückhaltemittels ermöglicht, wobei zumindest ein Teil des Riegels mit dem Gestänge in Eingriff steht, um ein eventuelles Rückführen von letzterem in eine zweite Position zu unterbinden, und der besagten zweiten Position montiert ist, die Verriegelungsposition genannt wird, in der das Gestänge mit dem besagten Teil des Riegels in Eingriff gelangt, um dessen Freigabe entgegenzuwirken,
und dadurch, dass die den Verriegelungspaaren (11) zugeordneten Gestänge (15) durch zumindest ein mechanisches Übertragungsmittel (12) miteinander verbunden sind, und dadurch, dass der Teil des Riegels mit dem Gestänge über zumindest ein Detektionsteil (200) von letzterem in Eingriff kommt, wobei das besagte Teil mobil zwischen einer ersten Position, die Verriegelungsposition genannt wird, und einer Verriegelung des Verriegelungspaares entspricht, in der es die Verriegelungsposition des Gestänges ermöglicht und imstande ist, durch den Riegel in Richtung einer Freigabeposition angetrieben zu werden, in der es das Gestänge in einer nicht reversiblen Form in seine eigene Freigabeposition antreibt, wobei der Übergang des Gestänges in den Freigabezustand somit ab der ersten offenen Auslöseklinke erfolgt.

2. Vorrichtung (10) nach Anspruch 1, **dadurch gekennzeichnet, dass** das Detektionsteil (200) über eine Gabel (202) in Eingriff mit dem Gestänge (15) kommt, die imstande ist, mit einem entsprechenden Ansatzstück (155) des Gestänges zusammenzuwirken.

3. Vorrichtung (10) nach irgendeinem der Ansprüche 1 oder 2, **dadurch gekennzeichnet, dass** das Detektionsteil (200) schwenkbar montiert ist, sodass es zwischen seiner ersten und zweiten Position schwingen kann.

4. Vorrichtung (10) nach irgendeinem der Ansprüche 1 bis 3, **dadurch gekennzeichnet, dass** das Gestänge (15) gegen ein elastisches Organ (303) montiert ist, das dazu tendiert, es in die Verriegelungsposition zurückzuführen.

5. Vorrichtung (10) nach irgendeinem der Ansprüche 1 bis 4, **dadurch gekennzeichnet, dass** das Detektionsteil (200) in seiner Verriegelungsposition auf Anschlag an einen Teil des Riegels (112) fährt.

6. Vorrichtung (10) nach irgendeinem der Ansprüche 1 bis 5, **dadurch gekennzeichnet, dass** sich der Riegel in Form eines Bügels (112) darstellt.

7. Vorrichtung (10) nach irgendeinem der Ansprüche 1 bis 6, **dadurch gekennzeichnet, dass** sich das Rückhaltemittel in Form eines Hakens (111) darstellt.

8. Vorrichtung (10) nach irgendeinem der Ansprüche 1 bis 7, **dadurch gekennzeichnet, dass** der Riegel (112) imstande ist, das Detektionsteil (200) über einen in Vorschubrichtung mobilen Stift (112b) anzutreiben.

9. Vorrichtung (10) nach Anspruch 8, **dadurch gekennzeichnet, dass** der Stift (112b) mobil mit dem Riegel (112) montiert ist.

10. Turbotriebwerksgondel, zumindest eine mobile Abdeckung (1) umfassend, **dadurch gekennzeichnet, dass** sie zumindest eine zugeordnete Verriegelungsvorrichtung (10) nach irgendeinem der Ansprüche 1 bis 9 umfasst.

## Claims

1. A locking device (10) between a first structure and a second structure, comprising several locking pairs (11), in particular disposed along a locking line, each locking pair (11) including at least one bolt (112) attached to the first structure and able to engage at least one corresponding retaining means (111), attached to the second structure, the bolt being also movably mounted against at least one elastic return means (113) tending to bring it in a spacing position from the retaining means,
each locking pair further comprising a detecting linkage (15), movably mounted between a first position, called unlocked position, in which it allows the unlocking of the bolt and the retaining means, at least one portion of the bolt then engages the linkage, so as to block therein a possible return of the latter towards a second position, and said second position, called locked position, in which the linkage engages said portion of the bolt so as to oppose its unlocking,
and in that the linkages (15) associated with the locking pairs (11) are interconnected by at least one mechanical transmission means (12), and in that the portion of the bolt engages the linkage through at least one detecting piece (200) of the latter, said piece being movably mounted between a first position, called locked position, corresponding to a locking of the locking pair in which it allows the locked position of the linkage and is able to be driven by the bolt to an unlocked position in which it drives the linkage in a non-reversible manner, to its own unlocked position, the passage of the linkage in the unlocked state thus being ensured from the first open lock.

2. The device (10) according to claim 1, **characterized in that** the detecting piece (200) engages the linkage (15) through a fork (202) able to cooperate with a corresponding shoulder (155) of the linkage.

3. The device (10) according to any one of claims 1 or 2, **characterized in that** the detecting piece (200) is pivotally mounted so as to switch between its first and second position.

4. The device (10) according to any one of claims 1 to 3, **characterized in that** the linkage (15) is mounted against an elastic member (303) tending to bring it back in the locked position.

5. The device (10) according to any one of claims 1 to 4, **characterized in that** in its locked position, the detecting piece (200) abuts against a portion of the bolt (112).

6. The device (10) according to any one of claims 1 to 5, **characterized in that** the bolt is in the form of a yoke joint (112).

7. The device (10) according to any one of claims 1 to 6, **characterized in that** the retaining means is in the form of a hook (111).

8. The device (10) according to any one of claims 1 to 7, **characterized in that** the bolt (112) is able to drive the detecting piece (200) through a rod (112b) movable in translation.

9. The device (10) according to claim 8, **characterized in that** the rod (112b) is movably mounted with the bolt (112).

10. A turbojet engine nacelle comprising at least one movable cowl (1), **characterized in that** it comprises at least one associated locking device (10) according to any one of claims 1 to 9.
